# FASCICULE DE BREVET EUROPEEN

(11) **EP 3 462 162 B1**
(45) Date de publication et mention de la délivrance du brevet: **25.05.2022**
(21) Numéro de dépôt: 18194609.6
(22) Date de dépôt: 14.09.2018
(51) Int. Cl.: G01N 21/05, G01N 21/03, B01L 3/00

(54) **DISPOSITIF MICRO-FLUIDIQUE EMPLOYÉ DANS L'ANALYSE D'UN ÉCHANTILLON LIQUIDE PAR VOIE OPTIQUE**
MIKROFLUIDISCHE VORRICHTUNG ZUR ANALYSE EINER FLÜSSIGEN PROBE
MICROFLUIDIC DEVICE FOR OPTICAL ANALYSIS OF A LIQUID SAMPLE

(30) Priorité: 29.09.2017 FR 1759107
(43) Date de publication de la demande: 03.04.2019
(73) Titulaire: Commissariat à l'Énergie Atomique et aux Énergies Alternatives, 75015 Paris (FR)
(72) Inventeur: VERPLANCK, Nicolas, 38120 SAINT EGREVE (FR); FONTELAYE, Caroline, 38430 SAINT JEAN DE MOIRANS (FR); HUE, Jean, 38240 MEYLAN (FR); LAURENT, Patricia, 38420 DOMENE (FR); NONGLATON, Guillaume, 38250 VILLARD DE LANS (FR); SARRUT-RIO, Nicolas, 38180 SEYSSINS (FR)
(74) Mandataire: INNOV-GROUP

(56) Documents cités:
- EP-A1- 2 080 554
- EP-A2- 2 725 342
- WO-A1-2014/078785
- US-A- 5 204 525
- US-A1- 2017 102 336

## Description

### Domaine technique de l'invention

La présente invention se rapporte à un dispositif micro-fluidique employé pour mettre en œuvre une analyse d'un échantillon liquide, notamment par voie optique à travers l'échantillon placé dans une chambre ou zone de mesure.

### Etat de la technique

Dans l'analyse d'hémoglobine par voie optique, des dispositifs transportables et utilisables directement par le patient lui-même sont connus. Ces dispositifs fonctionnent sur un principe de remplissage par capillarité d'une chambre de mesure par le sang du patient, prélevé en général au bout de l'un de ses doigts.

Pour évaluer le taux d'hémoglobine du patient par transmission optique à une longueur d'onde donnée ou sur une plage de longueurs d'onde donnée, le sang doit être lysé puis coloré pour absorber à cette longueur d'onde ou sur une plage de longueurs d'onde donnée. Pour effectuer la lyse et la coloration, on utilise classiquement au moins un réactif. Dans les dispositifs transportables, le réactif est en général déjà présent dans le circuit fluidique du dispositif.

Le brevet US4088448 décrit un tel circuit fluidique d'analyse comprenant une cuvette ou chambre d'analyse à travers laquelle est réalisée la mesure optique. Différentes formes de cuvette sont décrites dans ce brevet. Le réactif est directement embarqué dans la cuvette pour réagir avec le sang prélevé.

Dans cette solution de l'état de la technique, des bulles d'air peuvent se former lors du remplissage par capillarité de la cuvette, venant perturber la mesure optique par transmission. La présence de bulles d'air est notamment très gênante dans l'analyse de l'hémoglobine par voie optique.

Pour limiter l'apparition de bulles d'air dans la cuvette dédiée à la mesure par voie optique, le brevet US5674457 propose une microcuvette à remplissage par capillarité présentant une configuration améliorée. Cette configuration particulière permet notamment de limiter l'apparition de bulles d'air dans la zone de mesure par voie optique. Elle consiste notamment à utiliser un canal communicant d'un côté avec le conduit d'entrée et de l'autre côté avec la zone de mesure, et doté d'une force de capillarité supérieure à celle de la zone de mesure, de manière à empêcher les bulles d'air de stagner dans la zone de mesure.

Les documents EP2725342A1 et US2017102336A1 décrivent également des solutions d'analyse d'échantillon par lecture optique.

Cependant, une telle architecture peut s'avérer complexe à fabriquer et se prête difficilement à des systèmes de mesure multi-paramétriques.

Il existe donc un besoin de disposer d'un dispositif micro-fluidique qui permet d'éviter la présence de bulles d'air dans la zone d'analyse, afin de ne pas perturber la mesure par voie optique, ce dispositif présentant une architecture simple et facile à fabriquer.

### Exposé de l'invention

Ce but est atteint par un dispositif micro-fluidique pour analyse d'un échantillon selon la revendication 1.

Par rapport aux solutions décrites dans l'état de la technique, notamment dans les deux documents EP2725342A1 et US2017102336A1**,** la solution de l'invention prévoit de placer directement le réactif dans la chambre, mais non dans la zone de mesure.

Selon une particularité, la chambre de mélange et d'analyse comporte un orifice d'entrée sur lequel est connecté le canal d'entrée et un orifice de sortie sur lequel est connecté le canal de sortie.

Selon une autre particularité, la chambre de mélange et d'analyse présente une forme allongée suivant un axe principal et en ce que, dans sa première zone, la chambre présente une forme évasée par rapport au canal d'entrée, suivant une direction transversale par rapport à l'axe principal. Ladite forme évasée est par exemple en triangle. Ladite forme évasée est par exemple formée par un triangle suivant l'axe principal dont les deux flans sont recourbés.

Selon une autre particularité, dans sa deuxième zone, la chambre de mélange et d'analyse est formée entre deux parois parallèles de manière à présenter une profondeur constante.

Selon une autre particularité, dans sa deuxième zone, la chambre de mélange et d'analyse présente une section transversale rectangulaire.

Selon une autre particularité, dans sa troisième zone, la chambre de mélange et d'analyse présente une forme évasée par rapport au canal de sortie, suivant une direction transversale par rapport à l'axe principal. Ladite forme évasée est par exemple en triangle. Ladite forme évasée est par exemple formée par un triangle suivant l'axe principal dont les deux flans sont recourbés.

Selon une autre particularité, le dispositif est composé d'un support comprenant au moins deux couches superposées définissant entre elles un réseau micro-fluidique.

Selon une autre particularité, le réseau micro-fluidique est réalisé par au moins une empreinte réalisée sur une face de l'une desdites deux couches et recouverte par l'autre desdites deux couches.

Selon une autre particularité, ladite empreinte est réalisée avec une profondeur constante.

Selon une autre particularité, le réactif est stocké dans la chambre de mélange et d'analyse sous forme lyophilisée.

Selon une autre particularité, le réactif est un tensioactif anionique comme le SDS (dodécylsulfate de sodium).

L'invention concerne également un système d'analyse comprenant un dispositif d'analyse par transmission optique et un dispositif micro-fluidique tel que défini ci-dessus.

### Brève description des figures

D'autres caractéristiques et avantages vont apparaître dans la description détaillée qui suit faite en regard des dessins annexés dans lesquels :
- Les figure 1A et 1B représentent de manière schématique le dispositif micro-fluidique de l'invention, respectivement suivant une vue en perspective et suivant une vue de dessus ;
- Les figures 2A à 2C représentent de manière schématique le dispositif micro-fluidique de l'invention, selon plusieurs modes de réalisation distincts au niveau de la chambre de mélange et d'analyse ;

### Description détaillée d'au moins un mode de réalisation

Dans la suite de la description, les termes "amont", "aval", "entrée" et "sortie" sont à considérer en tenant compte du sens d'injection de l'échantillon dans le dispositif, ce sens étant indiqué par la flèche F sur les figures annexées. Par ailleurs on définit un repère à trois axes X, Y, Z.

Le dispositif 1 de l'invention consiste à recueillir l'échantillon liquide pour réaliser une analyse par transmission optique généralement selon l'axe Z. Le dispositif 1 sera notamment parfaitement adapté pour une analyse d'un échantillon de sang prélevé sur un patient afin d'évaluer le taux d'hémoglobine du patient.

Le dispositif 1 micro-fluidique de l'invention est configuré pour être facilement transportable et utilisable par le patient lui-même.

Le dispositif 1 sera avantageusement à usage unique et donc jetable après utilisation.

De manière particulière, l'analyse est réalisée par transmission optique à une longueur d'onde donnée ou sur une plage de longueurs d'ondes donnée à travers l'échantillon. Pour réaliser l'analyse optique, le sang prélevé doit être lysé puis coloré pour absorber à la longueur d'onde d'émission ou sur la plage de longueur d'ondes.

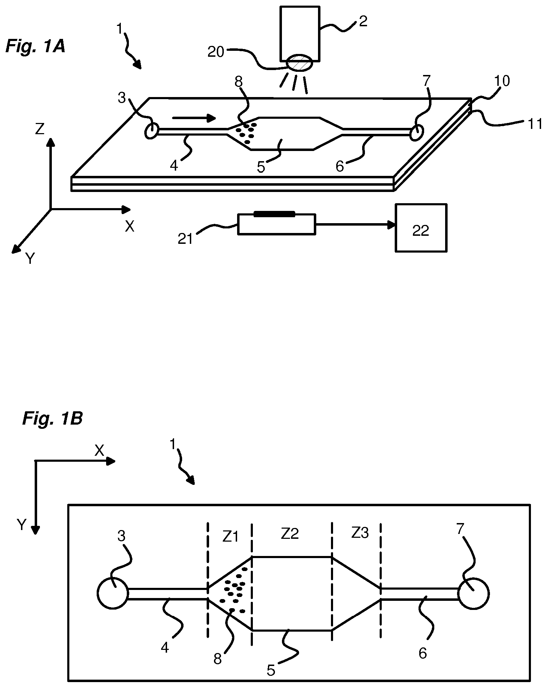

La figure 1A montre également un dispositif d'analyse 2 par transmission optique permettant l'émission du signal lumineux (20), la capture (21) du signal transmis et son traitement (22). Ce dispositif d'analyse 2 ne fait pas partie du dispositif micro-fluidique de l'invention.

Le dispositif micro-fluidique 1 de l'invention représente le support de l'analyse à effectuer qui comprend le réceptacle de forme et de dimensions voulues ainsi que le ou les réactifs nécessaires. Le dispositif est particulièrement adapté à l'embarquement de réactif(s) pour la lyse et la coloration de l'hémoglobine. Un système d'analyse complet comportera ainsi le dispositif d'analyse 2 par transmission optique et un dispositif micro-fluidique 1 tel que décrit dans la présente description. Les deux dispositifs sont agencés l'un par rapport à l'autre dans un boîtier spécifique pouvant former un ensemble monobloc directement utilisable par le patient. Le dispositif micro-fluidique 1 est par exemple amovible dudit boîtier.

Pour lyser le sang et le colorer, on utilise au moins un réactif 8.

De manière non limitative, dans le cas d'une analyse de sang, le réactif 8 choisi est du SLS (pour Sulfate Lauryl Sulfate), également appelé SDS (pour dodécylsulfate de sodium). Ce réactif 8 est connu pour lyser les globules rouges contenus dans le sang et pour colorer les molécules d'hémoglobine par une oxydation du groupe hémique, permettant la formation du composé SLS-Hb, composé colorant stable qui absorbe de façon préférentielle aux longueurs d'onde proches de 540 nm.

Selon une particularité, ce réactif 8 est directement placé dans le dispositif micro-fluidique 1, par exemple lors de la fabrication du dispositif. Le patient n'aura donc aucune manipulation de mélange ou de préparation à effectuer.

Le réactif 8 est avantageusement stocké dans le dispositif sous forme lyophilisée. La lyophilisation du réactif est réalisée in situ, c'est-à-dire directement dans le dispositif micro-fluidique. Bien entendu, le réactif 8 pourrait être stocké sous une autre forme, par exemple sous forme séchée.

De manière non limitative, la lyophilisation se fait en trois étapes : la congélation, la lyophilisation primaire et la lyophilisation secondaire. Ces trois étapes sont les suivantes :
∘ Les dispositifs sont placés sur les plateaux d'un lyophilisateur à plateaux pré-refroidis à -20°C. Un vide de 1 mbar est appliqué et la température du lyophilisateur passe de -20°C à -50°C en 2 heures.
∘ Un vide à 0,1 mbar est appliqué pendant 5 heures à -50°C. Puis la température remonte à 22°C en 4 heures. La température de 22°C est maintenue pendant 30 minutes toujours à 0.1 mbar.
∘ Un vide à 0,01 mbar est alors appliqué pendant 30 minutes à 22°C. Puis un vide à 0,001 mbar est appliqué pendant 30 minutes à 20°C.

A titre d'exemple, le volume de SLS injecté dans la chambre est de 0,9 µL d'une solution de SLS à la concentration 40 g/L dans l'eau préalablement dégazée aux ultrasons pendant 1 heure. La quantité de SLS lyophilisée est d'environ 35 µg. L'injection se fait à la micropipette ou par robot de dispense par l'entrée de la chambre des dispositifs à température ambiante.

En référence à la figure 1, le dispositif 1 micro-fluidique peut se présenter sous la forme d'un support telle qu'une plaque ou carte micro-fluidique ou d'un volume.

Cette carte micro-fluidique peut se composer d'au moins deux couches 10, 11 superposées et fixées l'une sur l'autre suivant l'axe Z. La première couche est la couche supérieure 10 et la deuxième couche est la couche inférieure 11. L'épaisseur de la carte est donc définie suivant l'axe Z.

Les deux couches 10, 11 peuvent être transparentes pour laisser passer la lumière. A titre d'exemple, pour une mesure optique d'hémoglobine, les deux couches 10, 11 doivent être transparentes pour une transmission suivant l'axe Z. Elles sont avantageusement de tailles identiques.

La carte est par exemple réalisée dans un matériau transparent de type verre, PMMA, (PolyMéthylMétAcrylate), PC (« PolyCarbonate »),COC ("Cylcic Olefin Copolymer") ou COP (« Cyclic Olefin Polymer »).

De manière non limitative, le réseau micro-fluidique du dispositif est formé par une empreinte réalisée sur la face supérieure de la couche inférieure 11 et/ou sur la face inférieure de la couche supérieure 10.

La couche supérieure 10 présente avantageusement une face supérieure plane et la couche inférieure 11 présente une face inférieure plane. Le réseau micro-fluidique interne est également formé entre deux faces planes parallèles entre elles et perpendiculaires à l'axe Z et entre des flans latéraux joignant lesdites deux faces planes entre elles. Les flans latéraux peuvent prendre toute configuration possible (plans, recourbés vers l'intérieur ou vers l'extérieur...).

Bien entendu, tout autre structure pourrait être envisagée et rentre dans le cadre de l'invention.

La couche supérieure 10 comporte au moins un passage d'entrée 3 par lequel est injecté l'échantillon vers le réseau micro-fluidique. Le passage d'entrée 3 est formé à travers la couche supérieure selon l'axe Z.

La couche supérieure comporte au moins un passage de sortie 7. Le passage de sortie peut être réalisé à travers la couche supérieure 10 suivant l'axe Z.

Le passage d'entrée 3 et le passage de sortie 7 peuvent également être dans le plan du réseau micro-fluidique et donc déboucher latéralement, suivant l'axe X ou Y.

Le réseau micro-fluidique présente avantageusement une profondeur (entre les deux faces planes) qui est constante suivant l'axe Z.

De manière non limitative, la profondeur typique d'un tel réseau micro-fluidique est comprise entre 30 microns et 100 microns. La sensibilité et la répétabilité sont accrues pour une profondeur comprise entre 30 microns et 50 microns.

Le réseau micro-fluidique du dispositif peut comporter un canal d'entrée 4 communiquant avec le passage d'entrée 3.

De manière non limitative, le canal d'entrée 4 s'étend avantageusement suivant une trajectoire rectiligne parallèle à l'axe X. Toute autre trajectoire est envisageable pour optimiser le déplacement de l'échantillon dans le cadre, par exemple, de protocoles plus complexes comportant des étapes successives, ou pour une sortie latérale débouchant sur le plan colinéaire à l'axe X.

Le canal d'entrée 4 présente avantageusement une section transversale par rapport à l'axe X qui est constante sur toute sa longueur. Sa section peut être de type rectangle ou de toute autre forme (angles arrondis dans le cadre de la gravure humide du verre).

Le réseau micro-fluidique peut comporter un canal de sortie 6.

Le canal de sortie 6 peut communiquer avec le passage de sortie 7.

De manière non limitative, le canal de sortie 6 s'étend avantageusement suivant une trajectoire rectiligne parallèle à l'axe X. Toute autre trajectoire est envisageable pour optimiser le déplacement de l'échantillon dans le cadre, par exemple, de protocoles plus complexes comportant des étapes successives, ou pour une sortie latérale débouchant sur le plan colinéaire à l'axe X.

Le canal de sortie 6 présente avantageusement une section transversale par rapport à l'axe X qui est constante sur toute sa longueur. Sa section peut être de type rectangle ou de toute autre forme (angles arrondis dans le cadre de la gravure humide du verre).

Le réseau micro-fluidique comporte une chambre de mélange et d'analyse 5.

La chambre de mélange et d'analyse 5 (ci-après la chambre 5) comporte un seul orifice d'entrée et un seul orifice de sortie.

Le canal d'entrée 4 débouche dans la chambre par son orifice d'entrée.

Le canal de sortie 6 est connecté sur l'orifice de sortie de la chambre 5. En variante, le passage de sortie 7 peut également être agencée selon l'axe Z et communiquer directement avec l'orifice de sortie de la chambre 5, permettant ainsi de se passer du canal de sortie 6.

La chambre 5 est évasée par rapport à la section transversale du canal d'entrée 4 et évasée par rapport à la section transversale du canal de sortie 6.

La chambre 5 présente une forme allongée suivant une direction parallèle à l'axe X.

Selon un aspect de l'invention, la chambre 5 est construite de manière à présenter trois zones Z1, Z2, Z3 distinctes adjacentes et successives suivant une direction parallèle à l'axe X. Sur les figures annexées, pour mieux les visualiser, les trois zones Z1, Z2, Z3 sont délimitées par des traits en pointillés.

La chambre 5 comporte une première zone Z1 amont sur laquelle est formé l'orifice d'entrée auquel est connecté le canal d'entrée 4.

La chambre 5 comporte une deuxième zone Z2 centrale, prolongeant la première zone Z1.

La chambre 5 comporte une troisième zone Z3 aval prolongeant la deuxième zone Z2, sur laquelle est formé l'orifice de sortie auquel est connecté le canal de sortie 6.

Le volume de la deuxième zone Z2 est avantageusement supérieur au volume de la première zone **Z1** et au volume de la troisième zone Z3.

Le volume de la troisième zone Z3 est choisi pour permettre de stocker l'ensemble des bulles d'air qui pourraient se former lors du remplissage et lors de la progression de l'échantillon liquide dans le réseau micro-fluidique. Ce volume pourra notamment dépendre de l'application visée. Il pourra être très faible, presque nul, si l'analyte génère peu de bulles lors du remplissage ou si le remplissage permet d'éviter leur formation.

Le réactif 8 est placé dans la première zone Z1 de la chambre 5 de manière à réagir en premier avec l'échantillon lorsque celui arrive en provenance du canal d'entrée 4. Comme décrit ci-dessus, le réactif 8 est avantageusement lyophilisé directement dans la première zone Z1 de la chambre 5 et stocké sous cette forme dans la première zone Z1 de la chambre de mélange et d'analyse.

Cette première zone Z1 de la chambre 5 doit être configurée pour éviter toute formation de bulles en entrée lors de l'injection à la fois du réactif (avant sa lyophilisation) et lors de l'injection de l'échantillon lors de l'utilisation du dispositif 1.

La deuxième zone Z2 est destinée à l'analyse de l'échantillon qui a été préalablement lysé et coloré par le réactif 8 dans la première zone Z1.

Selon un aspect de l'invention, l'analyse est réalisée de manière optique. Au moins au niveau de la deuxième zone Z2 de la chambre 5, le dispositif 1 est transparent de manière à être traversé par un rayon lumineux émis par une source de lumière pour l'analyse optique en transmission qui permettra, via une courbe de calibration, de remonter à la concentration de l'analyte recherché, par exemple l'hémoglobine. Dans la deuxième zone Z2, les deux couches 10, 11 du dispositif sont donc réalisées dans un matériau transparent, par exemple de type verre, PMMA, (PolyMéthylMétAcrylate), PC (« PolyCarbonate »),COC ("Cylcic Olefin Copolymer") ou COP (« Cyclic Olefin Polymer »).

Selon un aspect particulier de l'invention, au niveau de la deuxième zone Z2, le dispositif est formé de manière à présenter deux parois chacune à surfaces interne et externe planes. Ces deux parois sont positionnées parallèles entre elles et perpendiculaires à l'axe Z. Ces deux parois sont destinées à être traversées par le signal 20 optique émis (selon l'axe Z) par le dispositif 2. A titre d'exemple, ces deux parois peuvent être formées par les deux couches 10, 11 supérieure et inférieure de la carte formant le dispositif micro-fluidique, comme décrit ci-dessus dans la description de la réalisation du réseau micro-fluidique.

Selon un aspect de l'invention, le système 2 de mesure par transmission optique est agencé par rapport à la chambre de mélange et d'analyse de manière à émettre le signal lumineux exclusivement à travers la deuxième zone Z2 de la chambre 5 et à récupérer le signal qui a été transmis exclusivement à travers cette deuxième zone Z2 de la chambre 5. Pour leur part, les flans latéraux de la chambre peuvent prendre toutes les configurations possibles.

La troisième zone Z3 de la chambre est destinée à stocker les bulles d'air générées lors de l'injection de l'échantillon dans le dispositif micro-fluidique et donc à écarter ces bulles d'air de la deuxième zone Z2. Les bulles d'air sont en effet susceptibles de perturber l'analyse optique. Selon un aspect particulier de l'invention, il ne s'agit donc pas de tenter d'éliminer les bulles et d'éviter leur formation mais de les repousser, lors du remplissage, en dehors de la deuxième zone Z2 de la chambre 5 dédiée à l'analyse optique.

La troisième zone Z3 devra présenter un volume suffisant pour stocker l'ensemble des bulles d'air qui peuvent se former lors de l'injection de l'échantillon dans le dispositif.

Sur les figures annexées 2A à 2C, le dispositif micro-fluidique 1 est présenté avec plusieurs configurations de la chambre 5. Dans ces différentes configurations, il faut comprendre que dans la direction parallèle à l'axe Z, la chambre 5 présente une dimension (c'est-à-dire profondeur), au moins au niveau de la deuxième zone, qui est constante sur toute sa longueur.

### Figure 2A

La chambre 5 est représentée avec la première zone Z1 évasée suivant l'axe Y, en forme de triangle.

La deuxième zone Z2 de la chambre 5 comporte deux parois chacune à surfaces interne et externe planes, qui sont parallèles entre elles et perpendiculaires à l'axe Z. Sur cette deuxième zone Z2, la section de la chambre 5 est par exemple rectangulaire sur toute sa longueur. La section peut être constante ou non sur cette longueur.

La troisième zone Z3 de la chambre de mélange et d'analyse présente une forme évasée suivant l'axe Y en triangle. Cette forme permet notamment d'éviter que des bulles viennent stagner dans des coins.

### Figure 2B

La première zone Z1 évasée de la chambre 5 présente une forme évasée suivant l'axe Y et en triangle avec des flancs courbés ayant un rayon de courbure faible.

La deuxième zone Z2 reste avec une architecture rectangulaire de section constante sur toute sa longueur.

La troisième zone Z3 présente une forme en triangle dont les flancs sont courbés avec un rayon de courbure faible.

Cette solution permet notamment d'éviter les angles saillants à la jonction de la première zone Z1 avec la deuxième zone Z2 et à la jonction de la deuxième zone Z2 avec la troisième zone Z3. Cela permet notamment d'optimiser le remplissage et d'éviter de rencontrer des effets d'arêtes.

### Figure 2C

La chambre 5 est représentée avec une première zone Z1 évasée suivant l'axe Y, en forme de triangle.

La deuxième zone Z2 reste avec une architecture rectangulaire de section constante sur toute sa longueur.

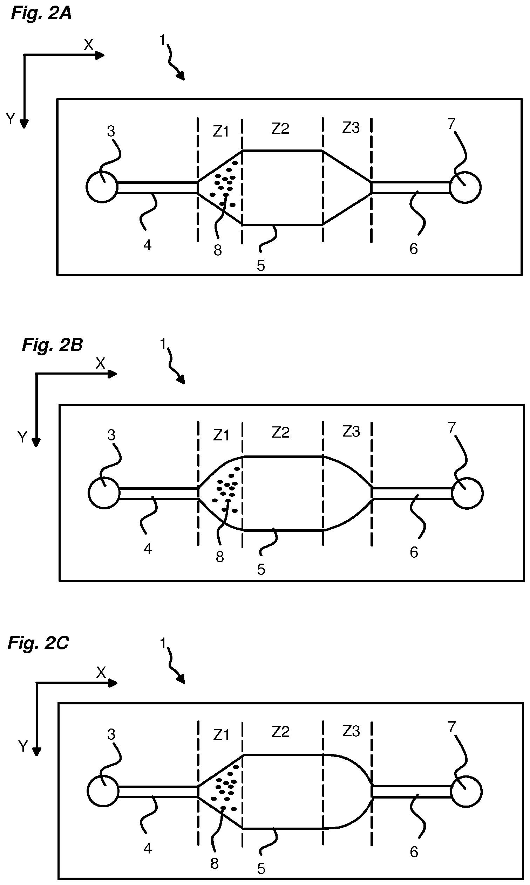

La troisième zone Z3 présente une forme en triangle dons les flancs sont courbés avec un rayon de courbure prononcé, plus important que celui proposé dans la configuration de la figure 2B.

Selon l'application et le volume de l'échantillon, les longueurs et largeurs des zones Z1, Z2, Z3 peuvent varier de quelques centaines de microns à quelques millimètres.

La solution de l'invention présente un certain nombre d'avantages, parmi lesquels :
- Solution simple à fabriquer ;
- Solution simple à utiliser car jetable et prête à l'emploi ;
- Solution fiable car permettant d'écarter les bulles d'air de la zone d'analyse optique ;
- Solution peu coûteuse ;
- Possibilité de communiquer avec d'autres chambres et/ou autres composants fluidiques en aval et/ou en amont, en parallèle et/ou en série.

## Revendications

1. Dispositif (1) micro-fluidique pour analyse d'un échantillon, comprenant un canal d'entrée (4) destiné à recevoir ledit échantillon à analyser sous forme liquide, un canal de sortie (6) et une unique chambre de mélange et d'analyse (5) située entre ledit canal d'entrée (4) et ledit canal de sortie (6), **caractérisé en ce que** ladite chambre (5) de mélange et d'analyse comporte :
- Une première zone (Z1) dans laquelle débouche ledit canal d'entrée (4), dans laquelle est placé un réactif (8) à mélanger avec ledit échantillon, ladite première zone (Z1) étant d'une forme évasée par rapport au canal d'entrée,
- Une deuxième zone (Z2) prolongeant ladite première zone (Z1) et configurée pour y effectuer une mesure optique,
- Une troisième zone (Z3) prolongeant ladite deuxième zone (Z2), à laquelle est relié ledit canal de sortie (6), ladite troisième zone (Z3) étant d'une forme évasée par rapport au canal de sortie (6),
où en l'absence de l'échantillon, ladite deuxième zone et ladite troisième zone ne contiennent pas ledit réactif.

2. Dispositif selon la revendication 1, **caractérisé en ce que** la chambre de mélange et d'analyse (5) comporte un orifice d'entrée sur lequel est connecté le canal d'entrée (4) et un orifice de sortie sur lequel est connecté le canal de sortie (6).

3. Dispositif selon la revendication 1 ou 2, **caractérisé en ce que** la chambre de mélange et d'analyse (5) présente une forme allongée suivant un axe principal (X) et **en ce que**, dans sa première zone (Z1), la chambre (5) présente une forme évasée par rapport au canal d'entrée (4), suivant une direction transversale par rapport à l'axe principal.

4. Dispositif selon la revendication 3, **caractérisé en ce que** ladite forme évasée est en triangle.

5. Dispositif selon la revendication 3, **caractérisé en ce que** ladite forme évasée est formée par un triangle suivant l'axe principal dont les deux flans sont recourbés.

6. Dispositif selon l'une des revendications 3 à 5, **caractérisé en ce que**, dans sa deuxième zone (Z2), la chambre de mélange et d'analyse (5) est formée entre deux parois parallèles.

7. Dispositif selon la revendication 6, **caractérisé en ce que**, dans sa deuxième zone (Z2), la chambre de mélange et d'analyse (5) présente une section transversale rectangulaire.

8. Dispositif selon l'une des revendications 3 à 7, **caractérisé en ce que**, dans sa troisième zone (Z3), la chambre de mélange et d'analyse (5) présente une forme évasée par rapport au canal de sortie (6), suivant une direction transversale par rapport à l'axe principal.

9. Dispositif selon la revendication 8, **caractérisé en ce que** ladite forme évasée est en triangle.

10. Dispositif selon la revendication 8, **caractérisé en ce que** ladite forme évasée est formée par un triangle dont les deux flans sont recourbés.

11. Dispositif selon l'une des revendications 1 à 10, **caractérisé en ce qu'**il est composé d'un support comprenant au moins deux couches (10, 11) superposées définissant entre elles un réseau micro-fluidique.

12. Dispositif selon la revendication 11, **caractérisé en ce que** le réseau micro-fluidique est réalisé par au moins une empreinte réalisée sur une face de l'une desdites deux couches et recouverte par l'autre desdites deux couches.

13. Dispositif selon la revendication 12, **caractérisé en ce que** ladite empreinte est réalisée avec une profondeur constante.

14. Dispositif selon l'une des revendications 1 à 13, **caractérisé en ce que** le réactif (8) est stocké dans la chambre de mélange et d'analyse (5) sous forme lyophilisée.

15. Dispositif selon la revendication 14, **caractérisé en ce que** le réactif est un tensioactif anionique comme le SDS (dodécylsulfate de sodium).

16. Système d'analyse comprenant un dispositif d'analyse par transmission optique et un dispositif micro-fluidique, **caractérisé en ce que** le dispositif micro-fluidique est tel que défini dans l'une des revendications 1 à 15.

## Patentansprüche

1. Mikrofluidische Vorrichtung (1) zur Analyse einer Probe, umfassend einen Einlasskanal (4) zur Aufnahme der zu analysierenden Probe in flüssiger Form, einen Auslasskanal (6) und eine einzelne Misch- und Analysekammer (5), die sich zwischen dem Einlasskanal (4) und dem Auslasskanal (6) befindet, **dadurch gekennzeichnet, dass** die Misch- und Analysekammer (5) Folgendes aufweist:
- Einen ersten Bereich (Z1), in dem der Einlasskanal (4) mündet, in dem ein Reagenz (8) zur Vermischung mit der Probe platziert ist, wobei der erste Bereich (Z1) im Vergleich zum Einlasskanal eine aufgeweitete Form aufweist,
- Einen zweiten Bereich (Z2), der den ersten Bereich (Z1) verlängert und dazu ausgebildet ist, dort eine optische Messung vorzunehmen,
- Einen dritten Bereich (Z3), der den zweiten Bereich (Z2) verlängert, mit dem der Auslasskanal (6) verbunden ist, wobei der dritte Bereich (Z3) im Vergleich zum Auslasskanal (6) eine aufgeweitete Form aufweist,
wobei bei Nichtvorhandensein der Probe der zweite Bereich und der dritte Bereich kein Reagenz enthalten.

2. Vorrichtung nach Anspruch 1, **dadurch gekennzeichnet, dass** die Misch- und Analysekammer (5) eine Einlassöffnung, an die der Einlasskanal (4) angeschlossen ist, und eine Auslassöffnung aufweist, an die der Auslasskanal (6) angeschlossen ist.

3. Vorrichtung nach Anspruch 1 oder 2, **dadurch gekennzeichnet, dass** die Misch- und Analysekammer (5) eine längliche Form entlang einer Hauptachse (X) aufweist, und dadurch, dass in ihrem ersten Bereich (Z1) die Kammer (5) im Vergleich zum Einlasskanal (4) eine aufgeweitete Form entlang einer Querrichtung zur Hauptachse aufweist.

4. Vorrichtung nach Anspruch 3, **dadurch gekennzeichnet, dass** die aufgeweitete Form dreieckig ist.

5. Vorrichtung nach Anspruch 3, **dadurch gekennzeichnet, dass** die aufgeweitete Form von einem Dreieck entlang der Hauptachse gebildet ist, dessen zwei Flanken gekrümmt sind.

6. Vorrichtung nach einem der Ansprüche 3 bis 5, **dadurch gekennzeichnet, dass** in ihrem zweiten Bereich (Z2) die Misch- und Analysekammer (5) zwischen zwei parallelen Wänden gebildet ist.

7. Vorrichtung nach Anspruch 6, **dadurch gekennzeichnet, dass** in ihrem zweiten Bereich (Z2) die Misch- und Analysekammer (5) einen rechteckigen Querschnitt aufweist.

8. Vorrichtung nach einem der Ansprüche 3 bis 7, **dadurch gekennzeichnet, dass** in ihrem dritten Bereich (Z3) die Misch- und Analysekammer (5) eine aufgeweitete Form im Vergleich zum Auslasskanal (6) entlang einer Querrichtung zur Hauptachse aufweist.

9. Vorrichtung nach Anspruch 8, **dadurch gekennzeichnet, dass** die aufgeweitete Form dreieckig ist.

10. Vorrichtung nach Anspruch 8, **dadurch gekennzeichnet, dass** die aufgeweitete Form von einem Dreieck gebildet ist, dessen zwei Flanken gekrümmt sind.

11. Vorrichtung nach einem der Ansprüche 1 bis 10, **dadurch gekennzeichnet, dass** sie von einem Träger gebildet ist, der wenigstens zwei übereinander gelagerte Schichten (10, 11) umfasst, die miteinander ein mikrofluidisches Netzwerk definieren.

12. Vorrichtung nach Anspruch 11, **dadurch gekennzeichnet, dass** das mikrofluidische Netzwerk von wenigstens einer Vertiefung gebildet ist, die auf einer Fläche einer der zwei Schichten ausgebildet und von der anderen der zwei Schichten bedeckt ist.

13. Vorrichtung nach Anspruch 12, **dadurch gekennzeichnet, dass** die Vertiefung mit einer konstanten Tiefe ausgebildet ist.

14. Vorrichtung nach einem der Ansprüche 1 bis 13, **dadurch gekennzeichnet, dass** das Reagenz (8) in der Misch- und Analysekammer (5) in gefriergetrockneter Form gespeichert ist.

15. Vorrichtung nach Anspruch 14, **dadurch gekennzeichnet, dass** das Reagenz ein anionisches Tensid wie etwa SDS (Natriumdodecylsulfat) ist.

16. Analysesystem umfassend eine Vorrichtung zur Analyse durch optische Übertragung und eine mikrofluidische Vorrichtung, **dadurch gekennzeichnet, dass** die mikrofluidische Vorrichtung wie in einem der Ansprüche 1 bis 15 definiert ist.

## Claims

1. Microfluidic device (1) for analysing a sample, comprising an input channel (4) intended to receive said sample to be analysed in liquid form, an output channel (6) and a single mixing and analysis chamber (5) situated between said input channel (4) and said output channel (6), **characterized in that** said mixing and analysis chamber (5) comprises:
- a first zone (Z1) in which said input channel (4) emerges, in which there is placed a reagent (8) to be mixed with said sample, said first zone (Z1) having a flared form with respect to the input channel,
- a second zone (Z2) extending said first zone (Z1) and configured to perform an optical measurement therein,
- a third zone (Z3) extending said second zone (Z2), to which said output channel (6) is linked, said third zone (Z3) having a flared form with respect to the output channel (6),
in which, in the absence of the sample, said second zone and said third zone do not contain said reagent.

2. Device according to Claim 1, **characterized in that** the mixing and analysis chamber (5) comprises an input orifice to which the input channel (4) is connected and an output orifice to which the output channel (6) is connected.

3. Device according to Claim 1 or 2, **characterized in that** the mixing and analysis chamber (5) has an elongate form along a main axis (X) and **in that**, in its first zone (Z1), the chamber (5) has a flared form with respect to the input channel (4), in a transverse direction with respect to the main axis.

4. Device according to Claim 3, **characterized in that** said flared form is triangular.

5. Device according to Claim 3, **characterized in that** said flared form is formed by a triangle along the main axis, the two sides of which are curved.

6. Device according to one of Claims 3 to 5, **characterized in that**, in its second zone (Z2), the mixing and analysis chamber (5) is formed between two parallel walls.

7. Device according to Claim 6, **characterized in that**, in its second zone (Z2), the mixing and analysis chamber (5) has a rectangular transverse section.

8. Device according to one of Claims 3 to 7, **characterized in that**, in its third zone (Z3), the mixing and analysis chamber (5) has a flared form with respect to the output channel (6), in a transverse direction with respect to the main axis.

9. Device according to Claim 8, **characterized in that** said flared form is triangular.

10. Device according to Claim 8, **characterized in that** said flared form is formed by a triangle, the two sides of which are curved.

11. Device according to one of Claims 1 to 10, **characterized in that** it is composed of a support comprising at least two superposed layers (10, 11) defining between them a microfluidic network.

12. Device according to Claim 11, **characterized in that** the microfluidic network is produced by at least one impression produced on a face of one of said two layers and covered by the other of said two layers.

13. Device according to Claim 12, **characterized in that** said impression is produced with a constant depth.

14. Device according to one of Claims 1 to 13, **characterized in that** the reagent (8) is stored in the mixing and analysis chamber (5) in freeze-dried form.

15. Device according to Claim 14, **characterized in that** the reagent is an anionic surface active agent such as SDS (sodium dodecyl sulfate).

16. Analysis system comprising an optical transmission analysis device and a microfluidic device, **characterized in that** the microfluidic device is as defined in one of Claims 1 to 15.
